# EUROPEAN PATENT APPLICATION

(11) **EP 1 211 624 A2**
(43) Date of publication of application: **05.06.2002**
(21) Application number: 01309035.2
(22) Date of filing: 24.10.2001
(51) Int. Cl.: G06F 17/60

(54) **Methods and apparatus for automatically producing spreadsheet-based models**

(30) Priority: 22.11.2000 GB 0284349
(71) Applicant: Decision Curve Limited, Wookey, Somerset BA5 1NL (GB)
(72) Inventor: Orchard, Andrew Clive, Old Quarry View, Crewekerne, Somerset TA18 7QA (GB); Bristow, Geoffrey John, Wookey, Somerset BA5 1NL (GB)
(74) Representative: Mackenzie, Andrew Bryan

(57) **Abstract**

A designer builds a condensed, generic form of a spreadsheet which is a definition file. This can be designed in Microsoft Excel, following a set of guidelines, or using a high level symbolic language. If required, HTML files can be produced directly from the Excel definition file to enable the user to input parameters using a web browser. A user defines the various parameters that are to be used for their particular spreadsheet and the software of the present invention expands the template's rows and columns according to those requirements, working out the effect on the formulae and linked cells as this takes place. Behind the scenes a set of information tables are built, either in memory or in a file, based on the information in the definition file. These tables are processed in a structured way to build the spreadsheet formulae, reference other tables and build any objects required to operate the model. Formulae are copied and/or rebuilt depending on the circumstances in which they will be used. In addition, the data input areas of the spreadsheet can be separated onto another worksheet to facilitate usability. Reports and charts can be adjusted to suit the data. Several templates or definitions can be combined into one spreadsheet and other objects, e.g. drop down lists and scrollbars, can be added to enhance usability. VBA code can also be included to perform complex operations not normally available in a spreadsheet. Definition libraries that describe, or contain a copy of, a part of the model can be added seamlessly, for example, a bar chart with a particular colour scheme or a complicated calculating function. The definition library can also contain VBA code, which can become part of the finished model and can add to its functionality.

## Description

This invention relates to methods and apparatus for producing a customised spreadsheet file and to a method of indexing a chart in a spreadsheet file.

Spreadsheet application programs such as Microsoft Excel, Lotus 123 or Borland Quattro Pro (RTM) provide tools for manipulating data stored in a tabular format. The table cells may, for example, have functions such as equations, associated with them, which are arranged to operate on the data in particular cells in order to automatically generate data to be held in other cells. The tables and associated functions are commonly termed a 'spreadsheet'. A spreadsheet may also contain one or more "worksheet" each of which is a set of cells which may be viewed separately and may, for example, be independently "locked" to prevent user access.

In the following description, the term "designer" is used to denote a person which sets up an initial definition of how a particular style of spreadsheet should be built. The term "user" is used to denote a person which requested a particular spreadsheet of this style and which then uses it.

Spreadsheets are very flexible tools and can range from being simple to very complicated. They can, for example, be used to add up a small list of numbers and they can also be used to calculate the risk associated with investing large quantities of money in a new venture. It is this wide range of uses that has allowed the spreadsheet market to grow to its current size of approximately 80 million users.

The very flexibility of spreadsheets is, however, one of the potential drawbacks. The flexibility means that there are many ways of designing a spreadsheet to offer a solution or analysis of a given problem. Furthermore, the designer of a spreadsheet may have used design techniques which are alien to the user of the spreadsheet which makes the spreadsheet design difficult for the user to understand. This is a particular problem if any changes to the spreadsheet design are envisaged.

Conventionally, spreadsheets have been built by hand. This means that mistakes are inevitable, and therefore complex spreadsheets almost certainly contain some errors. Many of these errors occur when the original spreadsheet is updated or amended by someone other than the original designer often because of the problem of understanding a spreadsheet designed by another person.

Several methods of creating customised spreadsheets and spreadsheet-based models using formalised modelling definition methods are described below. By formalising the design process, the potential for errors and the difficulties of amending already-designed spreadsheets are mitigated.

A spreadsheet-based model is defined as a piece of software, which uses a spreadsheet for calculating and, optionally, with additional functionality for navigating and using the model in a restricted or well-structured manner. The model may also be in any other format that enables the relationships between data to be calculated and displayed to the user. The definition file preferably is a structured Compact Definition File (CDF) or may be in the form of a high level symbolic language developed by the Applicants and termed "Interactive Forecasting Language" (IFL).

According to a first aspect of the invention, there is provided a method of automatically generating a spreadsheet comprising the steps of creating a spreadsheet definition, generating at least one user interface based on data contained in the spreadsheet definition and operable to receive user data related to user design choices, receiving user data via the input interface, and automatically combining the user data with the definition thereby to generate a customised spreadsheet by expanding and populating the definition according to the user data.

According to a second aspect, the invention provides a method of automatically generating a spreadsheet comprising the steps of creating a spreadsheet definition using a symbolic programming language, and automatically combining user-supplied data with the definition thereby to generate a customised spreadsheet by expanding and populating the definition according to the user data.

The definition file is a method of capturing the details of the structure of the spreadsheet and other information about its format and operation. The models produced may contain visual reporting mechanisms such as charts and tables of data in addition to printable reports. One powerful effect of this method is that a single definition file can be used to produce many different models by changing a few basic Parameters and options. For example, one model may require its sales forecast to be predicted for the next two years, whilst another may need a ten-year forecast.

The invention also relates to novel techniques to reduce the size of the model files and increase their speed of operation. One such mechanism provides the ability to change a chart display by indexing a table of data, thus reducing the need for multiple charts. Many hundreds of charts can be displayed with this technique, many more than Microsoft Excel, for example, can conventionally cope with.

Therefore, the invention also provides a method of indexing a worksheet object comprising the steps of providing an object worksheet operable to hold source data, providing a table worksheet operable to index portions of the object worksheet providing a switch worksheet operable to hold an index pointer which points to a set of values in the table worksheet which in turn indexes a portion of the source data in the chart worksheet, importing the said indexed source data into a data area of the switch worksheet, and generating an object based on the data in the said data area of the switch worksheet.

Although the type of input to the process between the aspects may vary (as described below), the processes are similar and these are described in more detail below. The techniques can be operated, for example, on a standalone PC, an intranet or over the Internet.

In another aspect, the invention. also provides a customised spreadsheet created by the method of creating a spreadsheet definition generating at least one user interface based on data contained in the spreadsheet definition and operable to receive user data related to user design choices, receiving user data via the input interface, and automatically combining the user data with the definition thereby to generate a customised spreadsheet by expanding and populating the definition according to the user data.

Ina further aspect, the invention provides a customised spreadsheet created by the method of creating a spreadsheet definition using a symbolic programming language, and automatically combining user-supplied data with the definition thereby to generate a customised spreadsheet by expanding and populating the definition according to the user data.

Preferred embodiments of the invention will now be described by way of example and with reference to the drawings and tables in which:-
Figure 1 shows an example of an Encapsulated Spreadsheet Model with a typical user Interface;
Figure 2 shows the general structure of an ESM with a user Interface 10 that has been built using an IFL Definition File;
Figure 3 shows the general structure of the Spreadsheet Compiler and its support files;
Figure 4 shows the general structure of a chart switching method used in accordance with the invention;
Figure 5 shows the general structure of the Spreadsheet creation process using CDFs; and
Table 1 shows an example of part of an IFL definition sheet;
Table 2 shows part of a Parameter list with the Parameter names listed in the first column;
Table 3 shows part of a Logic worksheet of a CDF; and
Table 4 shows the Logic worksheet of Table 3 after the rows have been expanded by a spreadsheet builder in accordance with the invention;
Table 5 is an example of the use of HTML-like tags to define row and/or column expansion; and
Table 6 is an example definition questions to be asked of a user.

The embodiments described below are described in connection with Microsoft Excel, Microsoft Visual Basic, Microsoft ASP and Microsoft Visual Basic for Applications. However, it will be appreciated that the invention is not limited to use with these applications.

In summary, a designer builds a condensed, generic form of a spreadsheet. This can be designed in Microsoft Excel, following a set of guidelines, or in IFL. If required, HTML files can be produced directly from the Excel definition file to enable the user to input parameters using a web browser.

The user defines the various parameters that are to be used for their particular spreadsheet and the software of the present invention expands the template's rows and columns according to those requirements, working out the effect on the formulae and linked cells as this takes place.

Behind the scenes a set of information tables are built, either in memory or in a file, based on the information in the definition file. These tables are processed in a structured way to build the spreadsheet formulae, reference other tables and build any objects required to operate the model. Formulae are copied and/or rebuilt depending on the circumstances in which they will be used. In addition, the data input areas of the spreadsheet can be separated onto another worksheet to facilitate usability. Reports and charts can be adjusted to suit the data. Several templates can be combined into one spreadsheet and other objects, e.g. drop down lists and scrollbars, can be added to enhance usability. VBA code can also be included to perform complex operations not normally available in a spreadsheet.

Definition libraries that describe, or contain a copy of, a part of the model can be added seamlessly, for example, a bar chart with a particular colour scheme or a complicated calculating function. The definition library can also contain VBA code, which can become part of the finished model and can add to its functionality.

The two options of a CDF-based or IFL-based process are now described in detail.

### Overview of the Process using IFL

The IFL process produces an Encapsulated Spreadsheet Model (ESM) consisting of several linked and referenced workbooks. The main model workbook contains the spreadsheet and associated information in tables; another workbook contains the user Interface itself and others contain specific information such as Visual Basic for Applications (VBA) code for particular versions of Microsoft Excel and/or the operating systems. The tables are built by a compilation process and allow the model to be made interactive. The tables are generally in a fixed format but can be expanded to enable increased functionality and retain compatibility with earlier versions. The model is controlled by an add-in workbook containing VBA code that is generic to many models.

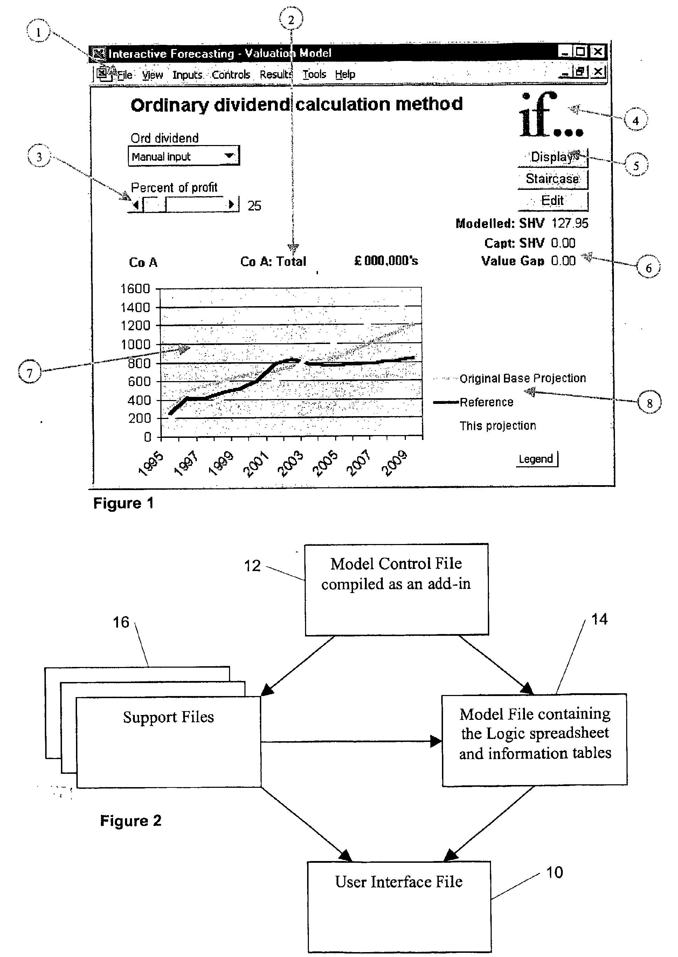

With reference to Figure 1, a screenshot of an example of an ESM with a typical user Interface is shown.

The main objects that make up the user Interface are a customisable menu system 1 which may be used to navigate the model and perform operations such as saving data, text boxes 2 which display a value or text that is an aid to the user, a Control Panel 3 which has a combination of scrollbars, textboxes and list boxes (alternatively, floating dialog boxes can be used to display more information or perform calculation routines), a logo 4 which is customisable to suit the needs of the designer, buttons 5 for quick access to particular charts, controls or routines, text boxes 6 to display the values of key data, charts 7 of various types to display data (this area can be used to show data in tabular form too), and a legend 8 to describe the data on the chart.

Figure 2 shows the general structure of an ESM with a user Interface 10 that has been built using an IFL Definition File. An add-in file 12 controls a model stored in a model file 14.

VBA routines stored in the model control file 12 use information from tables stored in the model file 14, to react appropriately. For example, the menus 1 are built dynamically according to information held in a menus table. (Optionally, the VBA routes may be stored in the model file 14). Support files 16 provide VBA code specific to a particular version of Microsoft Excel and templates for reports and input data sheets for the model.

### IFL Definition Files

Interactive Forecasting Language, (IFL), has been developed by the Applicants and is a high level symbolic language used to define the relationship between ranges of data. The model's user Interface is also defined using IFL.

The user Interface (Figure 1) typically consists of a screen with a menu system 1 to display charts, and tables of data in addition to control panels 3 that allow data to be changed so that its effect can be assessed.

Menu-driven routines are available for tasks such as displaying a series of control panels 3 or loading data into the model. Data can be transferred to other models and reports printed to a file or printer. IFL is particularly relevant for, but not exclusive to, time-based business models. IFL is itself written in a spreadsheet, with different worksheets used to build modules for particular tasks (as described below). Several workbooks can be combined to enable definition modules to be used in more than one model.

Table 1 shows an example of part of an IFL definition sheet and this is described below in connection with an explanation of some of the possible options.

### IFL Options

With reference to Table 1, the "Chart" column refers to predefined charts of a particular format, e.g. BS001 is a "Bar Stacked" chart that displays several bars on top of each other for each period of time covered by the data. The chart definition is held in a library file (described below) that contains an example and tabulated data from which the chart can be built.

The "Number Format" column defines the number format in the spreadsheet of the data for this Variable.

The "Variable" column contains the name of a set of data. The #number in front of the Variable name refers to a Category List which is defined on another worksheet and this allocates a number of rows of to this Variable and a reference name for each row.

The "Era" column contains symbols which are defined on another worksheet and allocate a number of columns to each Variable. Typically, a time-based business model will use "<" for historic periods, "@" for the current period and ">" for trended data.

The "Derivation" column contains the definition of the Variable for each of the Eras. This is made up of Variable names, mathematical operators and IFL Functions which have been designed to tell the Spreadsheet Compiler (described below) how to build the spreadsheet formulae to perform an operation. For example, the function SPLIT takes the nth row of data from the referenced Variable and adds it as a single row in the spreadsheet.

The derivation column also includes keywords such as BASE and CONTROLLED. BASE is used when the data can be input into the spreadsheet as opposed to being calculated from other data. The Spreadsheet Compiler builds separate workbooks containing the BASE Variables to make the task of data entry much simpler. This data may be transferred to the main model using a simple routine. A CONTROLLED Variable has attached to it a Control Panel 3 that may consist of scrollbars, textboxes or dropdown list etc. These are part of the user Interface that allows the data in the model to be altered.

Different models can be built from the same basic IFL files by changing one or more of the general Parameters such as the number of periods in an Era or the names in the Category Lists. The model may be customised for different uses and the definition modules may be included or excluded as necessary.

### IFL Compilation Method

The spreadsheet is produced from the IFL Definition File with an application (the Spreadsheet Compiler) which uses the Microsoft Excel environment and Microsoft Visual Basic for Applications (VBA). The Spreadsheet Compiler itself is an Excel add-in that generates a visible workbook as a user Interface to show the progress of the compilation process. The Spreadsheet Compiler is supported by a number of files that contain the definitions of objects or VBA code that can be copied to the ESM as required. These files are spreadsheet workbooks, text files or graphic files.

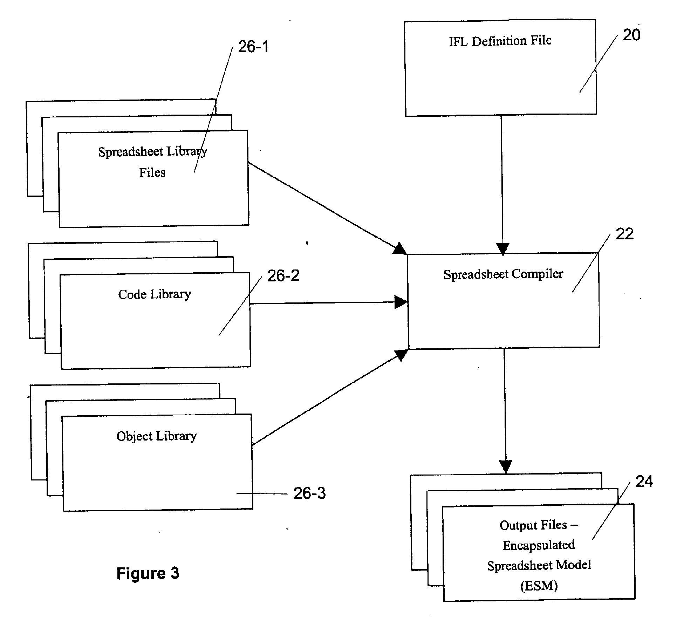

Figure 3 shows the general structure of the Spreadsheet Compiler and its support files.

The compilation process for IFL based ESMs is as follows:

The IFL Definition File 20 is checked for validity and syntax checking is performed on the IFL code contained in the file 20.

Working data tables are built in a separate workbook and multidimensional arrays of data are built in memory from the IFL. These data include all the information required about the structure of the spreadsheet and the formulas and functions used in the cells.

The structure of the user Interface including the menus, charts, control panels and reports are added to the various data tables until a complete picture of the model has been assembled in tabular form.

The Spreadsheet Compiler 22 uses the information in the tables to build the main ESM workbook 24 cell-by-cell and adding formulae as it goes. Further data tables are built into the model workbook 24 to record the row and column numbers of key cells and other associated data. These tables will be used by the menu driven VBA routines to manipulate the user Interface, e.g. to display a particular set of data as a chart or to export and save the data in a file.

The charts required by the model are built according to a library specification (stored in library files 26-1, 26-2 and 26-3) either by copying from a template stored in the spreadsheet library file 26-1 or manipulating the chart object's properties directly. The various charts are built with the appropriate number of series and categories as defined by the information in the tables. Similarly, other objects for the user Interface such as scrollbars and drop-down lists, are built either from templates in the object library file 26-3 or using VBA and manipulating their properties. Other files are produced to support the finished model. These consist of generated report templates and data input templates as well as any library files that may have been copied directly.

The completed sets of compiled files are saved in a new folder on the hard drive with the model file being compiled as an add-in to enable the contents to be hidden. The deliverable files (10, 12, 14 and 16) are separated from the working files by placing them in a separate sub-folder.

The model is run by opening the generic add-in 12. Using information from tables in the model file 14, the appropriate user Interface is generated automatically and the normal Microsoft Excel environment is replaced with the model's own. A customised menu bar allows the user to navigate the model and return to the traditional Excel interface at will.

### Object data switching

The number of worksheet objects available for display in a spreadsheet-based model can be very large. For this reason the Applicants have invented a method to overcome the problems associated with having a lot of worksheet objects in one file.

A Microsoft Excel workbook file becomes larger as more objects are added. This can result in the files taking up excessive space on the hard drive and file transfer times being increased. In addition, file opening and saving times are increased and furthermore, Microsoft Excel may become unstable.

The spreadsheet-based models of the present invention may have many hundreds of objects available to the user and it would be impractical or even impossible to have this number of objects available in the model file as individual objects. The present invention therefore uses a combination of Excel worksheet functions, tabulated information and Microsoft Visual Basic for Applications, (VBA).

There are two main ways to manipulate a worksheet object; one is to change the source of the data and the other is to change its built-in properties. Most of the object properties can be manipulated using VBA, including changing the data source, however, this can involve some "rewiring" time and the code runs relatively slowly. VBA is best used to change other properties such as the position of the object on the screen.

The method described below therefore involves an object of one type, (e.g. a bar or line chart), being permanently connected to the same cells in the workbook at all times The data in those linked cells is changed by reference to a table containing details about the position of the data in other worksheets.

The example below is described in connection with a chart object. However, a worksheet object may, for example, be a spinner, a scroll bar or a text box. The technique described below allows the cells of the spreadsheet which are linked to the object to be re-indexed. Thus, a scroll bar object which allows the magnitude of values in a particular cell to be manipulated using a mouse and scroll bar action, may be re-indexed to operate on a different cell in a spreadsheet. Similarly, a text box may be linked to a particular cell so that it displays the text presently in the cell and allows that text to be edited via the text box. Thus, a worksheet object is a spreadsheet object which is linkable to a particular cell or range of cells within a worksheet and which allows the display of data in that cell or range of cells and/or a user to manipulate the data in that cell or range of cells.

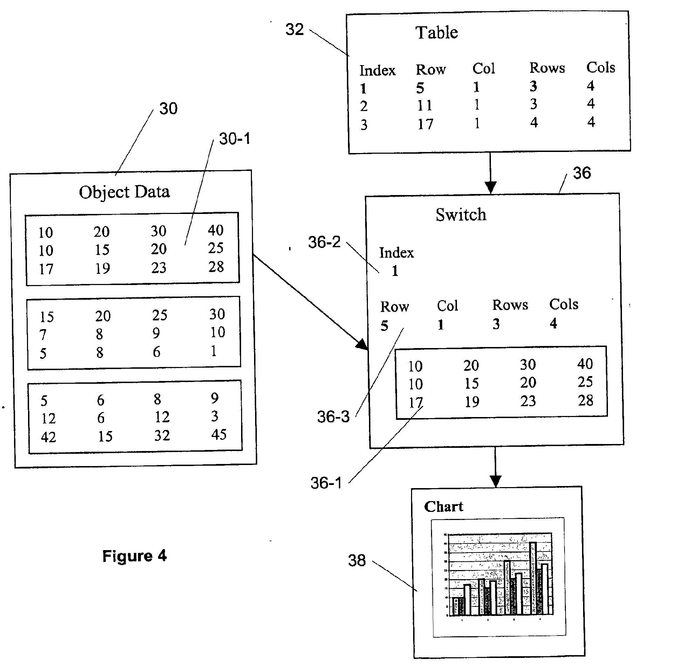

Figure 4 shows the general structure of the method used; the boxes 30, 32 and 36 represent separate areas of a worksheet or workbook.

The spreadsheet 30 contains the source data in a matrix of cells and the table 32 lists information about the location of the data. Each row in the table 32 includes the information needed to display one chart. The layout of each row in the table 32 is identical but can be as limited or extensive as necessary to produce the required chart. Information may, for example, include the location of the top left data cell, the number of rows and columns used for the data and the type of object to be displayed. Each table row has a unique incremented index number starting, for example, with 1.

The Switch 36 is normally on a single worksheet and consists of three parts; a range of cells 36-1 linked to the chart 30 called the data area, an input cell 36-2 for the index number of the source-data range 30-1 as defined in the table and a series of cells 36-3 used to return data from one row of the table 32 according to the index number in the index cell 36-2.

The data area 36-1 is of sufficient size suitable for it to display any of the source-data ranges referenced in the table 32. The index number can be inserted into the input cell 36-2 either manually or using VBA.

The index cell value is used to index the information table 32 and return the contents of the indexed row from the table 32 to other cells in the Switch 36 using an index or lookup function. For example, in Figure 4, the second column of the table 32 contains the row number of the first row of the source-data range 30-1. To return this value to the Switch 36, the formula "=INDEX (Table!$A$4:$F$6, $A$4, 2)" would be used, where "Table!$A$4:$F$6" is the location of the table 32, "$A$4" is the location of the index cell 36-2 on the Switch worksheet and "2" represents the second column of the table. Data from each column of the table is indexed in a similar way and returned to a separate cell in the Switch worksheet. Thus by changing the index number, data from a different row in the table is displayed in the Switch 36.

This data, having been retrieved from the table to the Switch 36, is then used to return the source-data to the Switch, and therefore the chart object 38, using another index function. Assuming the source-data 30-1 for the chart object38 is on a single worksheet 30 called "Results", every cell in the data area 36-1 of the Switch will contain a similar formula in the form "=INDEX (Results! $A$1:$D$19, $F$2+RowNo-1, $G$2+ColNo-1)" where:-
1. "Results! $A$1:$D$19" is the complete set of data on the Results sheet;
2. "$F$2" is the cell in the Switch containing the row number of the data as returned from the table;
3. "RowNo" is a value according to this cell's row position within the data area of the Switch;
4. "$G$2" is the cell in the Switch containing the column number of the data as returned from the table; and
5. "ColNo" is a value according to this cell's column position within the data area of the Switch.

These formulae can be built with additional functions to use text strings if several Result worksheets are referenced and the data range on each worksheet is different. Provided this information is recorded in the information table 32 and returned to the Switch 36 using the Index, many worksheets and even workbooks can be referenced. For example, if the worksheet name is recorded in the information table 32 and returned to cell E2 in the Switch, the formula above can be amended to "=INDEX (INDIRECT ($E$2 & "!" & "$A$1:$D$19"),$F$2+RowNo-1, $G$2+ColNo-1)". The data ranges on each result worksheet can be assembled from a text string in a similar way.

Furthermore, the Switch 36 can be manipulated with VBA. A feature of Microsoft Excel is that charts will only display visible areas of a worksheet. Thus, if the data range of the Switch, which is linked to the chart, is too large for the data, VBA can be used to hide the rows and columns that are not required to be displayed. The VBA can be triggered by an event such as the SheetCalculate or SheetChange event or as part of a larger routine.

### Overview of the Process using Compact Definition Files

Alternatively, a Customised Spreadsheet Model (CSM) may be produced from a Compact Definition File (CDF). The CDF method is used to design a CSM in condensed form. The model produced by this process differs from the IFL derived model in several ways:

The IFL compiler process described above produces an application in which the user is generally unable to make changes to the underlying structure or formulae - although the model can be designed in such a way so as to make some areas editable.

The IFL model's structure and information tables are not accessible to the user because any changes to the structure must be consistent and can affect several parts of the model.

The user Interface of an IFL model replaces the normal Microsoft Excel interface, whereas the CDF method produces a workbook or set of workbooks to be used with Microsoft Excel in the normal way. Alternatively, the CDF method may produce an output suitable to be held in a database or in some other format such as XML and presented to the user by means of a suitable application.

The CSM generated from the CDF may contain features to assist the user such as scrollbars and dropdown lists and inputs on separate worksheets, but generally these will be fully editable by the user.

If Microsoft Excel is used as the definition format, the CDF consists of a workbook with several worksheets. The Logic worksheets contain a condensed version of the customised spreadsheet. The Parameters sheet contains a list of Parameters that can be amended to produce a customised spreadsheet with the correct number of rows and columns to suit its purpose. For example, one user may require 6 sales input rows whereas another user may require only 1 row. By adjusting all the available Parameters, different spreadsheets can be built to fulfil the users' requirements exactly. The designer of the template decides which Parameters are available for the user to define. Other worksheets in the CDF can contain charts or reports linked to the data in the Logic worksheet.

The value of the Parameter values can be set in the CDF or alternatively, the Parameters can be displayed in a browser for the user to amend as required. HTML files can be automatically generated from the CDF using a VBA add-in tool called a Questionnaire Constructor (QC).

The Spreadsheet Builder process can be used on a single PC, across a network, an intranet or the internet. The application consists of a set of Dynamic link library (DLL) or program files that manage the Microsoft Excel environment and produce the customised spreadsheet workbook. Calls can be made directly to the DLLs by passing Parameter values using VBA or via HTML with the Spreadsheet Builder installed on the server.

In this example, output of the Spreadsheet Builder is a Customised Spreadsheet Model in the form of a workbook or set of workbooks.

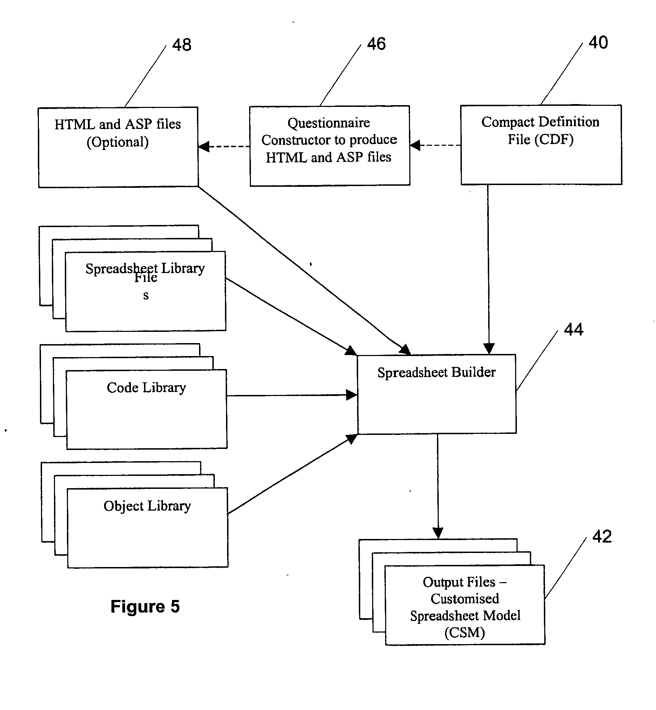

Figure 5 shows the general structure of the Spreadsheet creation process using CDFs.

### Compact Definition Files

The Logic worksheet(s) in the CDF 40 contain the formulae and functions that will appear in the CSM 42. However, any columns or rows that are to be repeated are shown only once provided that the formulae are similar in terms of the relative and absolute references that they contain. For example, a cell formula that uses data from the previous column may be repeated across several columns. In the CDF this formula is written only once.

The number of cells that this formula is expanded across is defined as a Parameter by the designer and defined as a quantity by the user. The comments feature of Microsoft Excel is one method used to define which of the cells can be expanded and in which direction. An alternative method is to use HTML-like tags to define how the rows and columns are to be expanded.

In the comments method, this is achieved with the use of keywords. For example, the Parameter "d" could be a Parameter used to define the number of divisions in a company and a row which is to be expanded "d" times would contain the text "COPY(d)" in the comment. The user would put a value to this Parameter equal to the number of divisions required in the model. A cell that could be repeated "r" rows and "c" columns would use the syntax "COPY(r, c)". The Spreadsheet Builder would then expand the cell that number of times.

The Parameters are listed on the Parameters worksheet of the CDF.

Table 2 shows part of a Parameter list with the Parameter names listed in the first column. A Questionnaire Constructor (QC) uses the other information in the table to build HTML files and validation code as described below.

An example of part of a Logic worksheet of a CDF is shown in Table 3.

In this example cell B4, containing the word "Sales", also contains a comment with the text "COPY(d)" (not shown) and the "Total Sales" row contains the SUM() function (not shown) in each of the time period columns but would reference only the cell above in this condensed form. The cell, C5, for Total Sales in 1995 would contain the formula "=SUM(C$4). If the Parameter "d" is given the value 4 by the user in order to create four sales rows in the finished spreadsheet, after expansion there would be four Sales rows and the Total Sales row for 1995 would SUM() all of those rows with the formula "=SUM(C$4:C$7)".

To improve readability of the generated spreadsheet, text in the row headers are appended a number so that each row has a unique header. In the example above, the four Sales rows would be headed Sales (1), Sales (2), Sales (3) and Sales (4) respectively.

Table 4 shows the Logic worksheet after the rows have been expanded for the user to include data for four divisions.

A Spreadsheet Builder 44 uses the cell reference type (absolute or relative) to determine how the formulae change when new rows or columns are inserted or copied. More complex situations can be catered for by the use of a set of Functions that define which part of an expanded range is used by another cell. For example, the function "DCRANGE" in a formula such as SUM(DCRANGE(C5:C5)) would cause the final spreadsheet to contain a SUM formula that includes the new range that cell C5 gets converted into. Similarly, the bottom cell only of the new range could be selected with the use of the function "DCBOTTOM".

In the tag method of defining how rows and columns are expanded, HTML-like tags such as <ROWCOPY> are used in each row and all cells in that row would be treated in the same way. For example, a tag such as <ROWCOPY Rows=SalesCats> will expand the row "SalesCats" number of times, where "SalesCats" is a Parameter that is given a value by the user. If "SalesCats" were given the value 4, the row would be expanded from one row to four rows, each containing its appropriate formula. An example of the use of tags is shown in Table 5.

Adding Parameter references to the appropriate column in a row that contains a tag or command describing the action to be taken can expand columns. For example, the command "ColumnsToCopy" in a <SETTINGS> tag will expand the column a number of times as defined by the Parameter in that column. Table 5 includes an example.

An alternative method of defining the Questions and Parameters to be presented to the user is described below. This method enables "logic" to be applied to the Questions. The effect of the "logic" is to present Questions to the user that are relevant to the answers given to previous Questions. Options are available within each Question that enable sections of the spreadsheet to be included or excluded as appropriate. This enables the CDF to contain several different methods of calculating and linking data; the actual method used being selected by the user by choosing an Option. This enables the CDF to be designed with Options that would normally cause a circular reference when using traditional building methods. A circular reference occurs when one cell is dependant on a cell that is dependant on the original cell.

In this method the Parameters worksheet is not used and the Questions are set out in a formal way on the Logic worksheets according to a set of rules. A single column of the Logic worksheet is used to list the <QUESTION> tags, which may include a set of Options, defined with <OPTION> tags, from which the user will be able to select the appropriate choice. The Questions and <OPTION> tags are written in a format not dissimilar to that of XML and HTML, i.e. a series of tags that contain attributes and values and that can be nested within other tags. Each Option is given a unique reference and these references are used to define whether further Questions and Options will be displayed to the user by using AND and OR logic within the <QUESTION> and <OPTION> tags. This is achieved with the use of keywords such as "Required=", being used to define the previously selected Options that are required for this Question to be displayed.

In addition to Options, the Questions may contain Parameters, which are defined by the use of a <PARAMETER> tag. Each Parameter has a unique reference and can be given a default value if necessary. Parameters may also contain "logic" to define whether a particular Parameter is presented to the user. The Questionnaire Constructor (QC), described earlier, can be used to generate HTML files automatically from a CDF containing tags.

An example of the Question layout is shown in Table 6.

### CDF Process

In a client-server environment, the Spreadsheet Builder application's DLL files are installed on the server. The CDF 40 is saved in a folder within the web-server's folder structure. A Questionnaire Constructor 46 is used to produce HTML and Active Server Pages (ASP) files 48 from the CDF and save them before being transferred to the web server. The HTML and ASP files 48 "walk" the user through the process of selecting the features that are to be included in, and giving values to the Parameters for, the customised version of the spreadsheet model. The user is presented with options in the form of checkboxes, radio buttons, drop down lists and the like, and further options are available on subsequent pages based upon the user's preferences. Parameter values are typed into a textbox or selected from a drop down list and each element is checked for validity against a set of criteria as defined in the CDF 40.

All the HTML and ASP files are generated from the CDF Parameters worksheet (Table 2). The CDF defines the choices using "IF" and "SELECT" statements to create a decision tree. Where options and choices are available to the user, separate files are built to create a system of interactive pages so that all possible permutations are catered for.

When the user has finished choosing options and setting the Parameter values, the information that has been gathered is sent to the builder application 44, which generates the CSM 42.

An XML schema, ModelML, can be used in place of the HTML information 48 to send data to the Spreadsheet Builder application. ModelML makes use of the various tags that have been used to describe, for example, the Questions and row copying methods. This data can be parsed and converted to a format, in the form of strings and arrays, suitable for the Spreadsheet Builder 44 to interpret.

The Spreadsheet Builder application DLLs contain class modules with functions that accept the Parameters from the HTML using Active Server Pages technology or from the XML parser and which return the name and location of the generated spreadsheet. The DLL function is called from the ASP file using the Server.CreateObject () method or any other suitable method. An alternative delivery method of the finished model is to send it via e-mail to the user.

The process that Spreadsheet Builder 44 uses to build Customised Spreadsheets from the CDF 40 is as follows:

The Parameter values and options are sent to the main function in the class module together with the name of the CDF and the Logic worksheet names.

The CDF 40 is opened in an instance of Microsoft Excel.

The Parameter values are allocated to the Parameters defined in the CDF 40.

The appropriate sections of the CDF worksheets are assembled or deleted as necessary.

Each cell comment on the Logic worksheets is read in turn and cells, rows and columns are inserted according to the instructions in the comments.

Rows are inserted below those that are to be copied and Columns are inserted to the right of those to be copied. No formulae are copied at this stage. The changes in the spreadsheet are recorded in multi-dimensional arrays in memory that are used later in the process if formula references need to be changed. When the Logic sheets have been expanded the formulas are copied into the new rows and columns as necessary. Cells that contain functions with references to cells that have been expanded are changed from a single cell reference to a range reference. For example, a total row containing a SUM() function, which initially referred to one row, may now need to sum four rows. The formula will be changed from, say, "=SUM(C$4)" to "=SUM(C$4:C$7)" by using the information held in the arrays built earlier.

After expansion and formula manipulation has been completed, cells that hold data but do not contain a formula are deemed to be data input cells and these may, optionally, be assembled on to another worksheet. Each input cell on the main Logic worksheets are then linked to the appropriate cell on the Inputs worksheet. Thus, all data input occurs on the Input worksheet and not the Logic worksheet. This aids data input and ensures formulae are not easily overwritten - a source of many spreadsheet errors. The cell formats are copied to the Inputs worksheet from the Logic worksheet to retain the original formats as defined by the designer.

The "deliverable" CSM (i.e. the Logic worksheet(s) and any input worksheets) may then be sent by email or on machine-readable media to the person making the request for the spreadsheet.

**Table 1 -**

| **Portion of an IFL Definition Sheet** | | | | |
|---|---|---|---|---|
| **Chart** | **Number Format** | **Variable** | **Era** | **Derivation** |
| | 1 | #1 Company information | T | BASE CONTROLLED @, TV001 |
| | | #2General setup items | T | BASE D1 CONTROLLED @, DC001(#4, #5) |
| | | #3Company setup items | T | BASE D2 CONTROLLED @, SV001 |
| | 0 | !First year index | T | SPLIT(#2 General setup items, 1) |
| | | ! First year | T | ! First year index + 1996 |
| | | ! Time to steady state | T | SPLIT(#2 General setup items, 2) |
| | | ! No of periods to display | T | ! Time to steady state + 1 |
| | | ! PE multiplier | T | SPLIT(#3 Company setup items, 1) |
| BS001 | | !Starting revenues | @ | SPLIT(#3 Company setup items, 2) |
| | | | > | ! Previous year starting revenues * (1+ ! Revenue growth %) |

**Table 2**

| **Parameter Name** | **Type** | **Min** | **Max** | **Question** | **Default** | **Blank Allowed?** |
|---|---|---|---|---|---|---|
| h | Integer | 1 | 10 | No of historic periods? | 4 | N |
| f | Integer | 1 | 50 | No of firm forecast periods? | 1 | N |
| t | Integer | 1 | 100 | No of trended forecast periods? | 6 | N |
| d | Integer | 1 | 100 | No of divisions, products, or other sales categories? | 4 | N |
| e | Integer | 1 | 100 | No of expense categories? | 2 | N |
| fa | Integer | 1 | 100 | No of types of fixed asset (tangible and intangible)? | 2 | N |
| od | Integer | 1 | 100 | No of types of Other debtors? | 3 | N |
| oc | Integer | 1 | 100 | No of types of Other creditors? | 3 | N |
| L | Integer | 1 | 100 | No of types of Loans and other creditors >12mths? | 2 | N |
| N | Text | | | Company Name? | New Co | N |
| P | Text | | | Name for this model or project? | P and L | N |

**Table 3**

| | A | B | C | D | E | F | G | H |
|---|---|---|---|---|---|---|---|---|
| 1 | **Profit and Loss** | | | | | | | |
| 2 | | | **1995** | **1996** | **1997** | **1998** | **1999** | |
| 3 | | | **Actual** | **Actual** | **Forecast** | **Trended Forecast** | **Trended Forecast** | **Summary** |
| 4 | Sales | | 100 | 120 | 144 | 216 | 324 | 904 |

| **5** | **Total sales** | | **100** | **120** | **144** | **216** | **324** | **904** |
|---|---|---|---|---|---|---|---|---|
| 6 | COS | | 100 | 47 | 144 | 216 | 324 | 831 |

| **7** | **Total COS** | | **100** | **47** | **144** | **216** | **324** | **831** |
|---|---|---|---|---|---|---|---|---|
| 8 | GP£ | | 61 | 73 | 86 | 130 | 204 | 554 |

| **9** | **Total GP£** | | **61** | **73** | **86** | **130** | **204** | **554** |
|---|---|---|---|---|---|---|---|---|
| | | | | | | | | |

**Table 4**

| | A | B | C | D | E | F | G | H |
|---|---|---|---|---|---|---|---|---|
| 1 | **Profit and Loss** | | | | | | | |
| 2 | | | **1995** | **1996** | **1997** | **1998** | **1999** | |
| 3 | | | **Actual** | **Actual** | **Forecast** | **Trended Forecast** | **Trended Forecast** | **Summary** |
| 4 | Sales (1) | | 100 | 120 | 120 | 120 | 144 | 144 |
| 5 | Sales (2) | | 100 | 120 | 120 | 120 | 144 | 144 |
| 6 | Sales (3) | | 100 | 120 | 120 | 120 | 144 | 144 |
| 7 | Sales (4) | | 100 | 120 | 120 | 120 | 144 | 144 |

| **8** | **Total sales** | | **400** | **480** | **480** | **480** | **576** | **576** |
|---|---|---|---|---|---|---|---|---|
| 9 | COS (1) | | 39 | 47 | 47 | 47 | 58 | 58 |
| 10 | COS (2) | | 39 | 47 | 47 | 47 | 58 | 58 |
| 11 | COS (3) | | 39 | 47 | 47 | 47 | 58 | 58 |
| 12 | COS (4) | | 39 | 47 | 47 | 47 | 58 | 58 |

| **13** | **Total COS** | | **156** | **188** | **188** | **188** | **230** | **230** |
|---|---|---|---|---|---|---|---|---|
| 14 | GP£ (1) | | 61 | 73 | 73 | 73 | 86 | 86 |
| 15 | GP£ (2) | | 61 | 73 | 73 | 73 | 86 | 86 |
| 16 | GP£ (3) | | 61 | 73 | 73 | 73 | 86 | 86 |
| 17 | GP£ (4) | | 61 | 73 | 73 | 73 | 86 | 86 |

| **18** | **Total GP£** | | **244** | **292** | **292** | **292** | **346** | **346** |
|---|---|---|---|---|---|---|---|---|
| | | | | | | | | |

**TABLE 5**

| | **A** | **B** | **C** | **D** | **E** |
|---|---|---|---|---|---|
| **1** | <SETTINGS> | | | | |
| **2** | Columns to copy | | NumAct | NumFcst | NumTrnd |
| **3** | </SETTINGS> | | | | |
| | | | | | |
| **4** | | | **1995** | **1996** | **1997** |
| **5** | | | Actual | Forecast | Trended Forecast |
| **6** | **<ROWCOPY Rows=SalesCats></ROWCOPY>** | Sales | 100 | 110 | 120 |
| **7** | | Total sales | 100 | 110 | 120 |
| **8** | **<ROWCOPY Rows=COSCats></ROWCOPY>** | COS | 60 | 65 | 70 |
| **9** | | Total COS | 60 | 65 | 70 |
| **10** | | | | | |

**TABLE 6**

| | A | B | C | D | E | F |
|---|---|---|---|---|---|---|
| **1** | **<QUESTION Required=6>** | **Do you want to include a Profit & Loss Account?** | | | | |
| **2** | **<OPTION OptionRef=10>** | **Yes, include a detailed Profit & Loss Account** | | | | |
| **3** | | | Sales | 100 | 110 | 120 |
| **4** | | | Total sales | 100 | 110 | 120 |
| **5** | | | COS | 60 | 65 | 70 |
| **6** | | | Total COS | 60 | 65 | 70 |
| **7** | **<OPTION OptionRef=11>** | **Yes, include a summary Profit & Loss Account** | | | | |
| **8** | | | Sales | | | |
| **9** | | | Total sales | 100 | 110 | 120 |
| **10** | | | COS | | | |
| **11** | | | Total COS | 60 | 65 | 70 |
| **12** | **<OPTION OptionRef=12>** | **No, Do not include any Profit & Loss Account** | | | | |
| **13** | | | Sales | | | |
| **14** | | | Total sales | | | |
| **15** | | | COS | | | |
| **16** | | | Total COS | | | |
| **17** | **<PARAMETER Name=SalesCats Default=5></PARAMETER** | **How many Sales Categories should be included?** | | | | |
| **18** | **<PARAMETER Name=COSCats Default=3></PARAMETER** | **How many COS Categories should be included?** | | | | |
| **19** | **</QUESTION>** | | | | | |
| **20** | | | | | | |

## Claims

1. A method of automatically generating a spreadsheet comprising the steps of:-
(a) creating a spreadsheet definition,
(b) generating at least one user interface based on data contained in the spreadsheet definition and operable to receive user data related to user design choices,
(c) receiving user data via the input interface, and
(d) automatically combining the user data with the definition thereby to generate a customised spreadsheet by expanding and populating the definition according to the user data.

2. A method according to claim 1 further including the step of providing a user with the customised spreadsheet.

3. A method according to claim 2, wherein the customised spreadsheet is provided to a user by an electronic transmission.

4. A method according to claim 1, wherein the spreadsheet definition includes a cell formula.

5. A method according to claim 1, wherein the spreadsheet definition includes a repetition flag indicating the possibility of repeating the formula in at least one direction across the customised spreadsheet.

6. A method according to claim 1, wherein the spreadsheet definition is stored in a standard spreadsheet file format.

7. A method according to claim 1, wherein the generated user interface is arranged to be presented to a user via a web browser application.

8. A method according to claim 7, wherein the electronic transmission is an email transmission.

9. A method according to claim 1, wherein the customised spreadsheet is generated based on a plurality of spreadsheet definitions.

10. A method according to claim 1, wherein the customised spreadsheet includes a separate worksheet containing cells which require user input.

11. A method of automatically generating a spreadsheet comprising the steps of:-
(a) creating a spreadsheet definition using a symbolic programming language, and
(b) automatically combining user-supplied data with the definition thereby to generate a customised spreadsheet by expanding and populating the definition according to the user data.

12. A method according to claim 11, wherein the spreadsheet definition includes fields selected from the group of a chart field, a number format field, an era field and a derivation field.

13. A method according to claim 11, wherein the customised spreadsheet is generated based on a plurality of spreadsheet definitions.

14. A method according to claim 11, wherein the customised spreadsheet includes a separate worksheet containing cells which require user input.

15. A method of indexing a worksheet object comprising the steps of:-
(a) providing an object worksheet operable to hold source data,
(b) providing a table worksheet operable to index portions of the object worksheet
(c) providing a switch worksheet operable to hold an index pointer which points to a set of values in the table worksheet which in turn indexes a portion of the source data in the chart worksheet,
(d) importing the said indexed source data into a data area of the switch worksheet, and
(e) generating an object based on the data in the said data area of the switch worksheet.

16. A method according to claim 15, wherein the worksheet object data displayed is varied by varying the value of the index pointer to point to a different set of cells in the table worksheet.

17. A customised spreadsheet created by the method of:-
(a) creating a spreadsheet definition,
(b) generating at least one user interface based on data contained in the spreadsheet definition and operable to receive user data related to user design choices,
(c) receiving user data via the input interface, and
(d) automatically combining the user data with the definition thereby to generate a customised spreadsheet by expanding and populating the definition according to the user data.

18. A customised spreadsheet created by the method of:-
(a) creating a spreadsheet definition using a symbolic programming language, and
(b) automatically combining user-supplied data with the definition thereby to generate a customised spreadsheet by expanding and populating the definition according to the user data.
